# EUROPEAN PATENT SPECIFICATION

(11) **EP 2 677 897 B1**
(45) Date of publication and mention of the grant of the patent: **04.03.2015**
(21) Application number: 12718346.5
(22) Date of filing: 23.02.2012
(51) Int. Cl.: A47B 47/05, A47B 96/14, F16B 12/02

(54) **MODULAR CLOSET SYSTEM**
MODULARES KLOSETTSYSTEM
SYSTÈME MODULAIRE POUR PLACARDS

(30) Priority: 23.02.2011 BE 201100130
(43) Date of publication of application: 01.01.2014
(73) Proprietor: RUBELKO, 2970 's-Gravenwezel (BE)
(72) Inventor: DRIES, Rudi, B-2970 's Gravenwezel / Schilde (BE)
(74) Representative: Sarlet, Steven Renaat Irène
(86) International application number: PCT/IB2012/050830
(87) International publication number: WO 2012/114299

(56) References cited:
- EP-A1- 0 456 104
- DE-A1- 3 224 711
- DE-C1- 4 022 432
- US-A1- 2001 017 009

## Description

This invention relates to a modular closet system according to the preamble of the first claim.

In the prior art, modular closet systems are known, which allows closet arrangements to be built based on wall elements and connection profiles, for example, from DE 40 22 432 C1 and DE 32 24 711 A1.

It is an object of the invention to provide such a closet system by means of which a greater variety of closet arrangements can be formed.

This object is achieved according to the invention with the modular closet system having all the features of the first claim.

The modular closet system according to the invention comprises:
- wall elements for forming the side and partition walls of a closet arrangement;
- rear wall elements for forming rear walls of a closet arrangement;
- a set of connection profiles for the connection of the wall elements and the rear wall elements with each other.

As used herein, the term "rear wall elements" refers to the elements of a closet arrangement forming the backside of the inner space of the closet, i.e. which extend in the width and height direction of the closet and generally substantially parallel with the front of the closet.

As used herein, the term "wall elements" refers to the elements of a closet arrangement forming the side and partition walls of the closet, i.e. which extend in the depth and height direction of the closet and generally substantially perpendicular to the front of the closet.

According to the invention, the set of connection profiles comprises the following profiles:
- wall coupling profiles, each of which comprise first holding means for holding the wall elements and first coupling means for the coupling of other connection profiles of the set;
- rear wall functionalizing profiles, each of which comprise on both sides second holding means for holding the rear wall elements, second coupling means which are complementary to the first coupling means for coupling of the rear wall functionalizing profiles to the wall coupling profiles, and first suspension means provided for receiving the complementary second suspension means;
- and rear wall coupling profiles according to claim 1.

The closet system according to the invention further comprises functional elements exhibiting the second suspension means, and which are provided to be mounted to the rear walls of the closet arrangement through the rear wall functionalizing profiles.

By providing the rear wall functionalizing profiles and the functional elements, the rear wall of the closet arrangement, built up with the closet system according to the invention, can be functionalized. This means that the rear wall not only serves as a rear wall for the part of the closet arrangement which is mounted at the front side, but also as a rear wall for the functional elements of the closet arrangement which are provided to the rear side. In this way, a greater variety of closet arrangements can be built with the modular closet system according to the invention than the hitherto known modular closet systems.

The set of connection profiles comprises in addition rear wall coupling profiles, which differ from the rear wall functionalizing profiles and which also comprise on opposite sides the second holding means for holding the rear wall elements and the second coupling means that are complementary to the first coupling means, wherein the second coupling means are each time provided on both sides of the rear wall coupling profiles, such that a closet arrangement can be formed with wall elements on either side of the rear wall elements. By means of this rear wall coupling profiles closet arrangements may be constructed back to back against one another with a common rear panel. Consequently, this even increases the diversity of closet arrangements that may be obtained by means of the closet system according to the invention.

Preferably, the wall coupling profiles are provided on either side of the wall elements as an integral part thereof.

In a preferred embodiment, the first suspension means on the rear wall functionalizing profiles are designed as laterally-oriented slots, and the wall coupling profiles may also comprise such slots laterally-oriented slots, provided for suspending accessories in the inner space of the closet arrangement. Preferably, the slots on the rear wall functionalizing profiles have the same shape as the slots on the wall coupling profiles, such that the accessories and functional elements can be used both in the inner space of the closet arrangement and against the rear wall.

In a preferred embodiment, the rear wall functionalizing profiles each comprise a hollow space in which a fluorescent lighting is incorporated. Preferably, this hollow space is closed off by a transparent element, such that direct eye contact with the fluorescent lighting is avoided.

In a preferred embodiment, the rear wall functionalizing profiles comprise inclined parts on both sides, which are directed towards a rear wall element held by the second holding means and onto which a LED lighting is provided. The inclined orientation has the advantage that the LED lighting functions as an indirect lighting. The inclined parts are preferably at an angle of 0-60 °, more preferably 0-45 °, with respect to the rear wall element held by the second holding means.

In a preferred embodiment, the set of connection profiles further comprises front profiles, provided for finishing a front side of a closet arrangement, and coupling elements for coupling the front profiles to the first coupling means. Therefore, the coupling elements are complementary to the wall coupling profiles, which, in turn, may be used both in front of and to the back of the wall elements. Preferably, the wall coupling profiles are provided as an integral part of the wall profiles.

Preferably, the coupling elements provide a hollow space between the front wall profiles and the wall coupling profiles, in which a fluorescent lighting is incorporated and which is closed off by means of transparent elements on both sides of the coupling elements. In this way, lighting is integrated in the front of the closet.

Preferably, the second holding means of the rear wall functionalizing profiles and the rear wall coupling profiles comprise resilient profiles for holding the rear panels by clamping.

The invention will be further explained with reference to the following description and the appended figures.
Figures 1 and 2 respectively show a sectional view and a perspective view of a portion of a first closet arrangement, mounted with part of a preferred embodiment of the modular closet system according to the invention.
Figures 3 and 4 respectively show a sectional view and a perspective view of a portion of a second closet arrangement, mounted with part of a preferred embodiment of the modular closet system according to the invention.
Figures 5 and 6 respectively show a sectional view and a perspective view of a part of a third closet arrangement, mounted with a preferred embodiment of the modular closet system according to the invention.
Figures 7 and 8 respectively show a sectional view and a perspective view of a portion of a fourth closet arrangement, mounted with a preferred embodiment of the modular closet system according to the invention.
Figure 9-12 show perspective views of preferred embodiments of the functional elements which are provided to be affixed onto the rear wall.

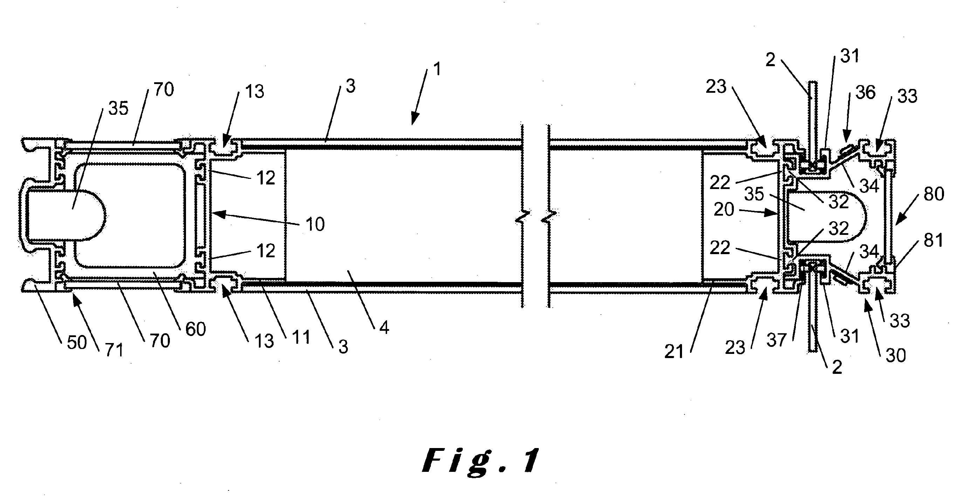

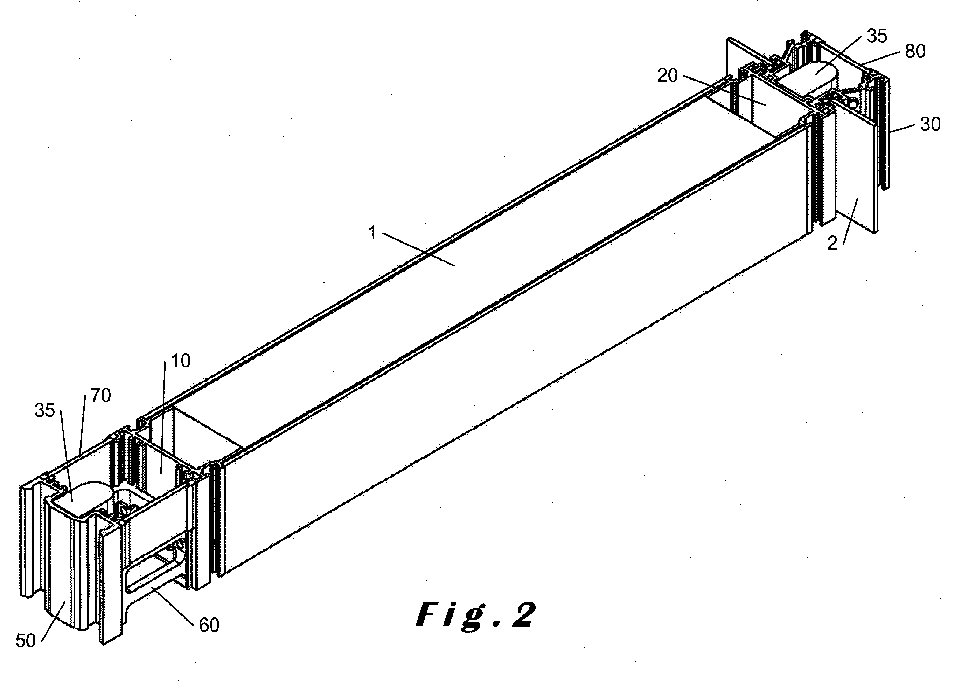

The first closet arrangement shown in Figures 1 and 2 comprises a wall element 1, constructed from thin finishing boards 3 on both sides, in between an insulating material 4 is present, and onto which both left and right a wall coupling profile 10, 20 is arranged as an integral part by means of the first holding elements 11, 21 which are attached (e.g., by gluing) against the inside of the finishing plates 3 and thus hold the wall elements 1. This wall element 1 may be a side wall or a partition wall of the closet arrangement. The closet arrangement further comprises rear wall elements 2, formed as thin panels, which are the rear wall of the closet arrangement. The connection of the wall elements 1 and the rear wall elements 2 with each other is done by means of a rear wall functionalizing profile 30.

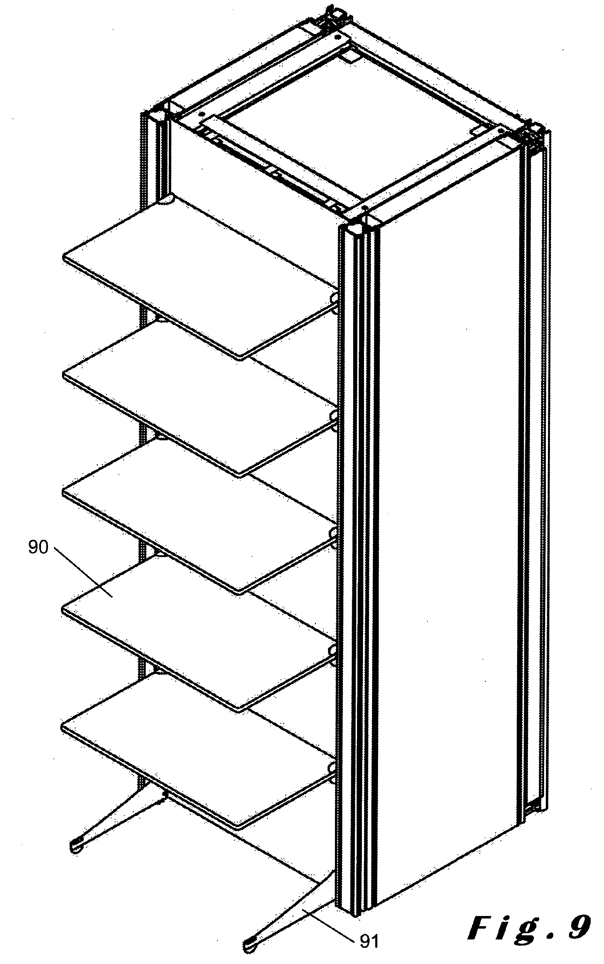

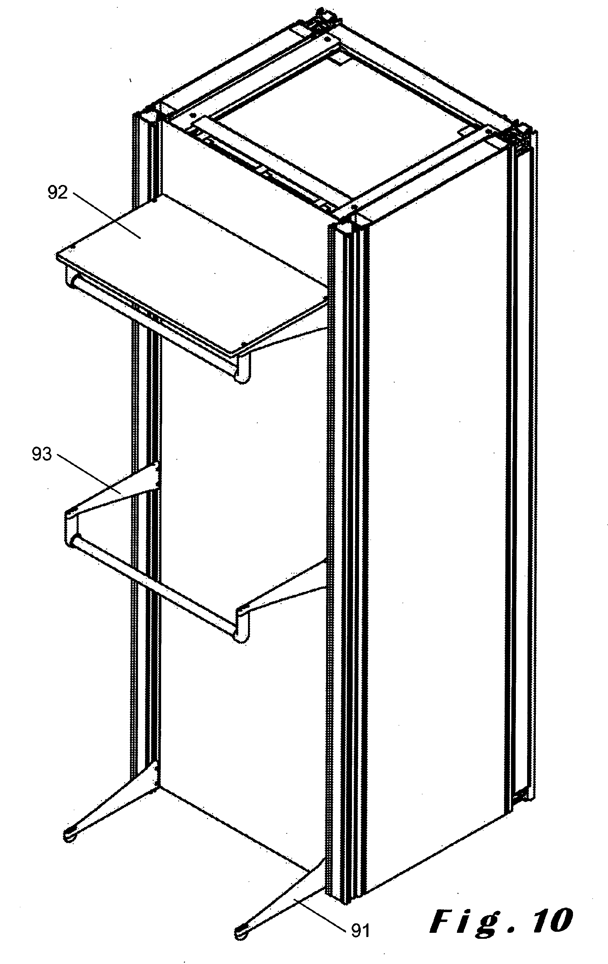

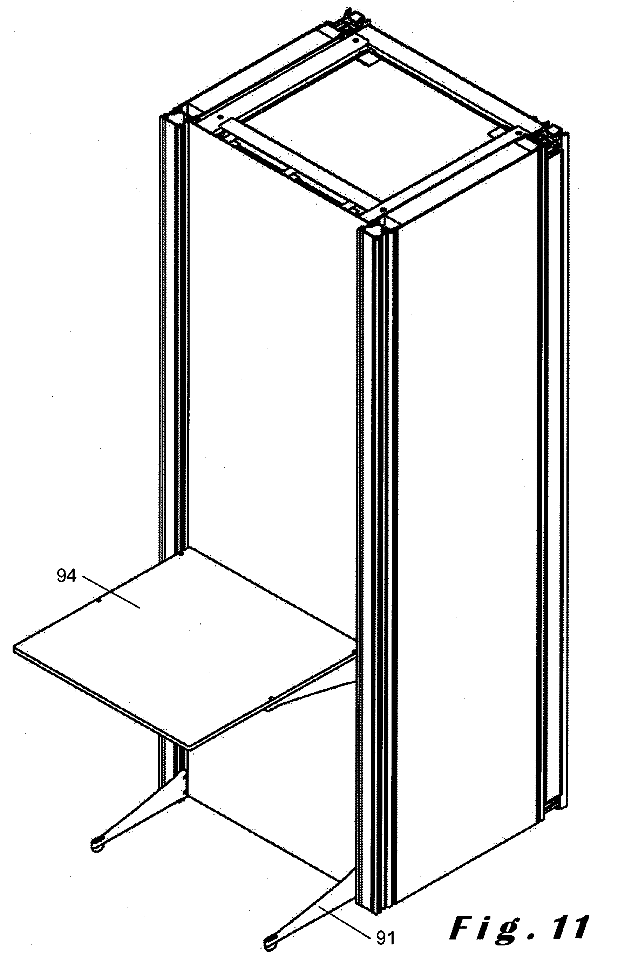

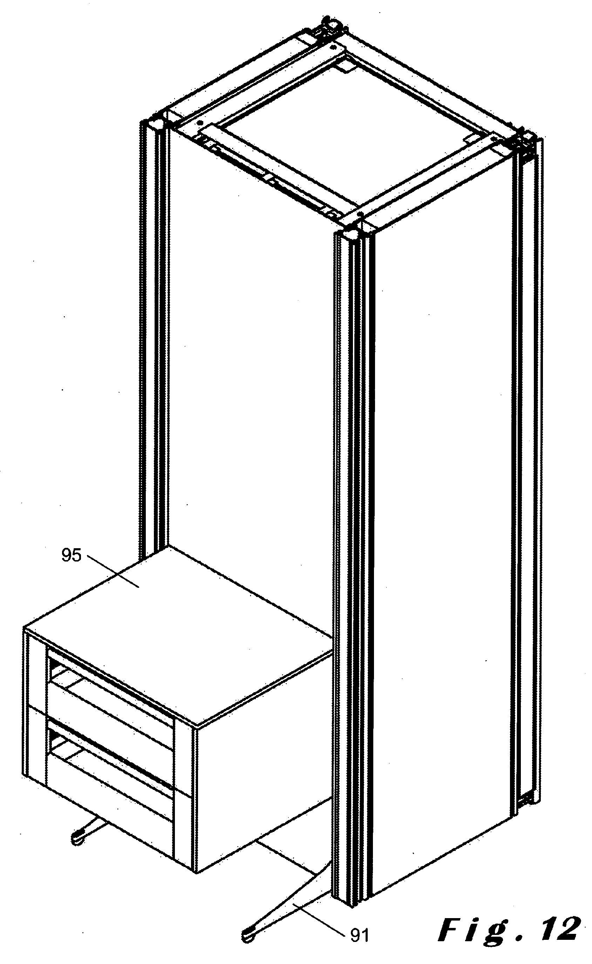

The wall coupling profiles 10, 20 each comprise first coupling means 12, 22, and the rear wall functionalizing profile 30 comprises second coupling means 32. The first and second coupling means are complementary to each other and engage in each other. The rear wall functionalizing profile 30 has on either side second holding means 31 for holding the rear wall elements 2. The shape of the rear wall functionalizing profile is thereby such, that the held rear wall elements 2 extend at an angle of substantially 90° with respect to the wall elements 1. The rear wall functionalizing profile 30 further comprises first suspension means, here designed as slots 33. These slots are provided for receiving second complementary suspension means, which in turn are provided on the functional elements 90 - 95 (see Figure 9 - 12), which are provided to be affixed to the rear walls 2 of the closet arrangement through the rear wall functionalizing profiles 30. By application of these functional elements 90-95, the rear wall of the closet obtains a function in the interior of a home, e.g. as a desk, for suspending lighting, etc.

The wall coupling profiles 10, 20 have slots 13, 23 at the sides of the wall element 1 for suspending accessories in the inner space of the closet arrangement , such as shelves, drawers, etc. These slots 13, 23 have the same shape as the slots 33 on the rear wall functionalizing profile 30, such that the accessories and the functional elements may effectively be used at both sides, i.e. both in the inner space of the closet and against the rear wall.

The second holding means 31 of the rear wall functionalizing profile 30, with which the rear wall elements 2 are being held, are constructed as slots with a resilient strip 37 on each opposite side. The rear wall elements 2 are sandwiched between these strips 37.

The rear wall functionalizing profile 30 comprises a hollow space in which a fluorescent lighting 35 is incorporated. This hollow space is closed off by a transparent element 80, which is fixed on the rear wall functionalizing profile 30 by means of sealing profiles 81 and by which direct eye contact with the fluorescent light 35 is avoided. The rear wall functionalizing profile 30 further comprises inclined portions 34 on both sides, on which an LED lighting 36 is provided. The inclined orientation has the advantage that the LED lighting 36 functions as an indirect lighting. The inclined portions 34 are preferably at an angle of 0-60°, more preferably 0-45°, relative to the second holding means 31 being held by the rear wall elements 2.

The first closet arrangement shown in Figures 1 and 2 further comprises a front profile 50, which finishes the front side of the closet arrangement. This front profile 50 is connected to one of the wall coupling profiles 10 of the wall element 1 by means of a coupling element 60. To this end, the coupling element has on both sides the second coupling means, which are also provided on the rear wall functionalizing profile 30 and which are complementary to the first coupling means 12, such that the coupling element 60 can be coupled complementary to the wall coupling profile 10. As shown, also the coupling between the front profile 50 and the coupling element 60 is carried out in this way.

The coupling element 60 provides a hollow space between the front profile wall 50 and the wall coupling profile 10, in which a fluorescent light 35 is incorporated and which is closed off by means of transparent elements 70 on both sides of the coupling element 60. In this way, lighting is integrated in the front of the closet. The transparent elements 70 are held between the sealing profiles 71 in exactly the same way as the transparent element 80 on the rear wall functionalizing profile 30.

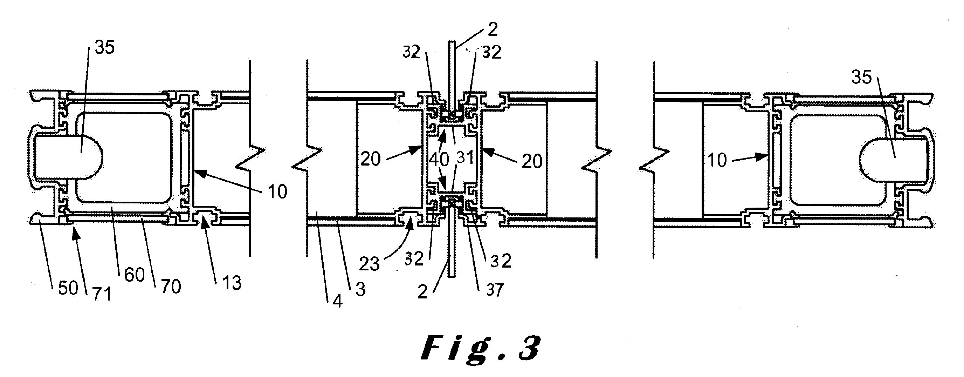

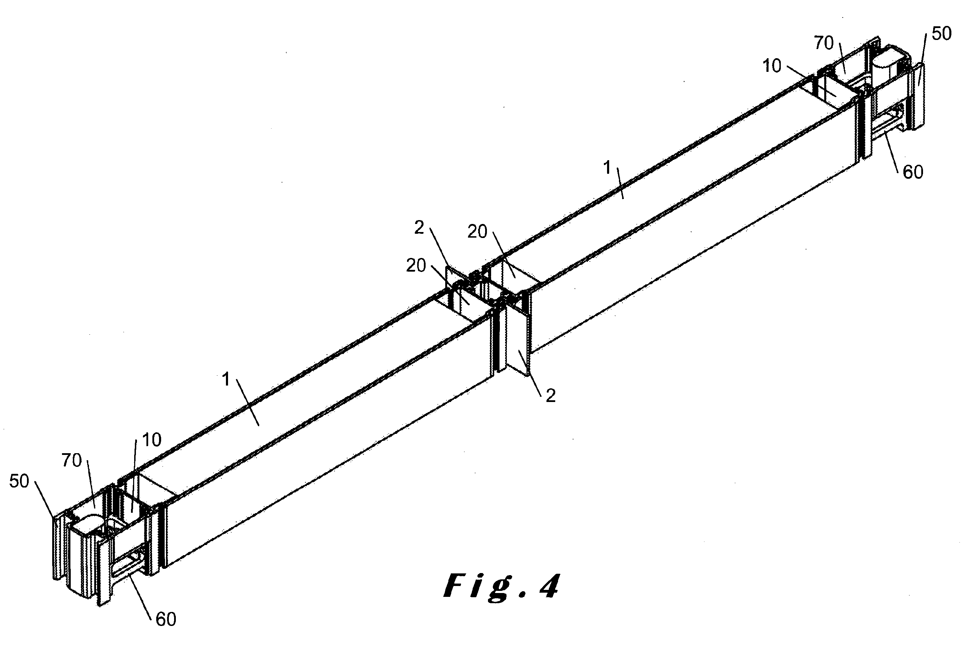

The second closet arrangement shown in Figures 3 and 4 comprises twice the above-described wall element 1 with the integral wall coupling profiles 10, 20, each coupled to the front profile 50 by means of coupling elements 60. The two wall elements 1 are coupled to each other back to back by means of rear wall coupling profiles 40. These rear wall coupling profiles 40 comprise also the second holding means 31 with resilient strips 37 for holding the rear wall elements 2 under an angle of substantially 90° with respect to the wall elements 1. The rear wall coupling profiles 40 each show on both sides the second coupling means 32 that are complementary to the first coupling means 22 of the wall coupling profiles 20. This results in a closet arrangement with a closet section on both side of the rear wall.

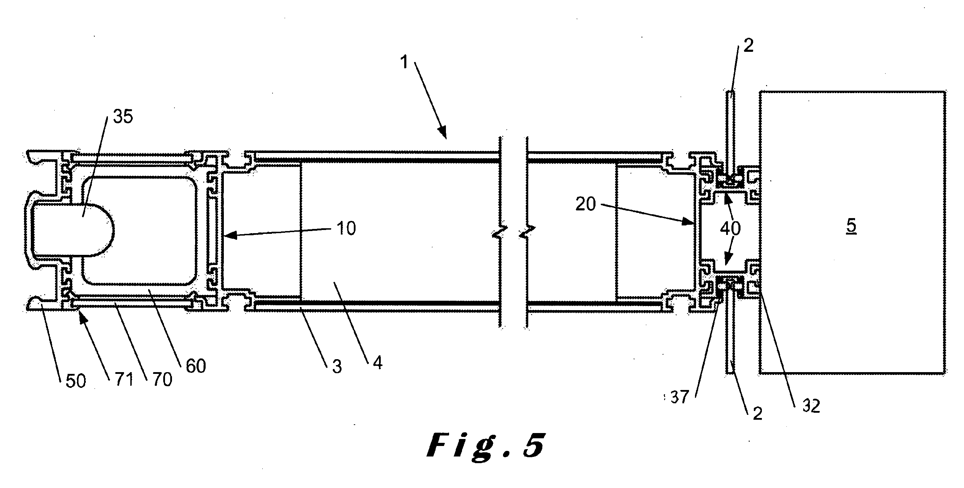

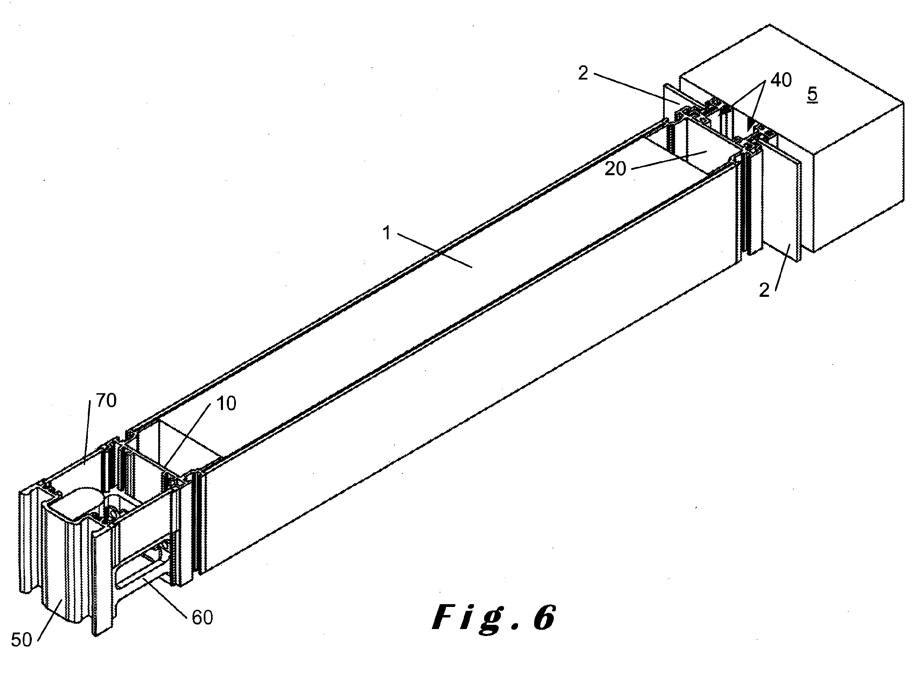

The third closet arrangement shown in Figure 5 and 6 comprises the above-described wall element 1 with the integral wall coupling profiles 10, 20, at the front side coupled to the front profile 50 by means of the coupling element 60 and at the rear side coupled with the rear wall coupling profiles 40, in which the rear wall elements 2 are being held. This third closet arrangement is positioned with the rear wall coupling profiles 40 against a wall 5. The closet arrangement may be fixed against this wall 5, for example by means of the second coupling means 32 of the rear wall coupling profiles 40 and a complementary profile (not shown) or other element which is attached on the wall 5.

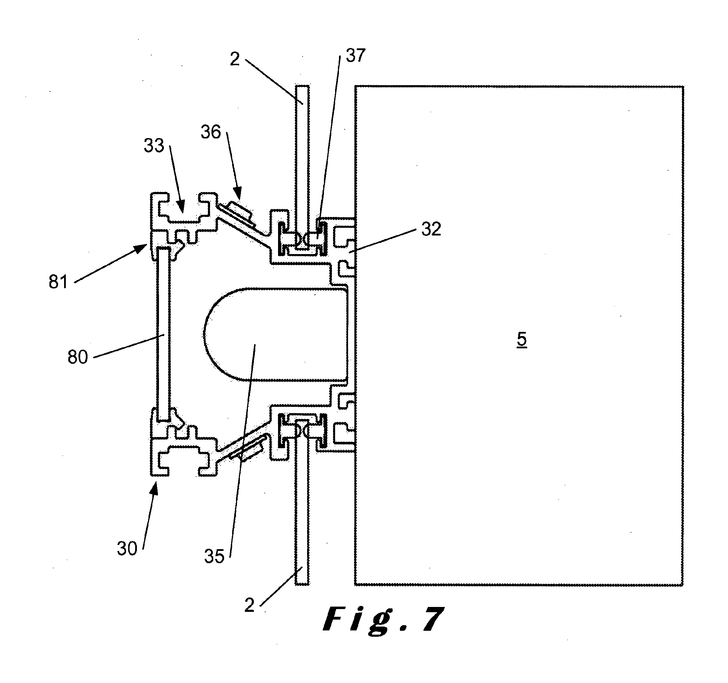

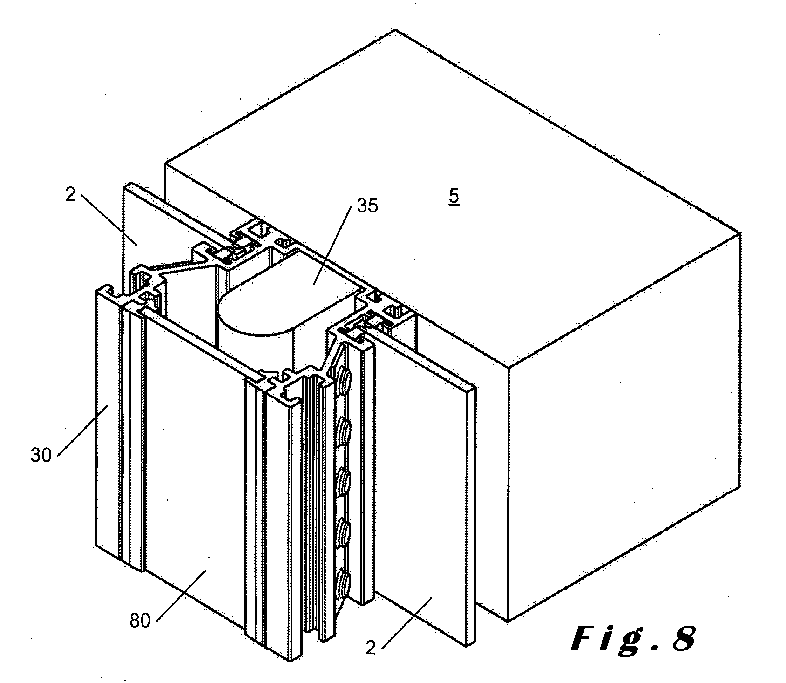

The fourth closet arrangement shown in Figures 7 and 8 comprises the above-described rear wall functionalizing profile 30, in which two rear wall elements 2 are being held, mounted against a wall 5. The closet arrangement may be fastened against this wall 5, for example by means of the second coupling means 32 of the rear wall functionalizing profile 30 and a complementary profile (not shown) or another element which is attached on the wall 5. This allows the functional wall of the closet arrangement of Figure 1 and 2 may to be mounted directly against a wall.

Figure 9-12 show examples of functional elements 90-95 which are provided to be mounted on the rear wall of the closet arrangement of Figures 1 and 2, more specifically each between two rear wall functionalizing profiles 30 by means of suspension means which are complementary to the slots 33 in the rear wall functionalizing profiles. The examples shown are a shelf 90, a stabilizing base 91 which serves to prevent tipping over of the closet arrangement, a rod for clothes hangers 92 with a shelf, a rod for clothes hangers 93, a desktop 94 and a drawer unit 95. Of course, many other functional elements may be suspended to the rear wall functionalizing profiles 30, in as far as they are provided with the suspension means complementary to the slots 33.

The combination of the closet arrangements of Figures 1-12 shows the variety of closet arrangements which can be obtained with one and the same modular closet system according to a preferred embodiment of the invention.

## Claims

1. Modular closet system, comprising:
- wall elements (1) for forming side and partition walls of a closet arrangement;
- rear wall elements (2) for forming rear walls of a closet arrangement;
- a set of connection profiles for the connection of the wall elements and the rear wall elements with each other,
said set of connection profiles include the following profiles:
- wall coupling profiles (10, 20), each of which comprise first holding elements (11, 21) for holding the wall elements (1) and first coupling means (12, 22) for the coupling of other connection profiles of the set;
- rear wall functionalizing profiles (30), each of which comprise second holding means (31) for holding the rear wall elements (2), second coupling means (32) which are complementary to the first coupling means (12, 22) for coupling of the rear wall functionalizing profiles (30) to the wall coupling profiles (10, 20), and first suspension means provided for receiving complementary second suspension means;
- rear wall coupling profiles (40), different from the rear wall functionalizing profiles (30), which also comprise the second holding means (31) means for holding the rear wall elements (2) and the second coupling means (32) which are complementary to the first coupling means (12 , 22) of the wall coupling profiles (10, 20), **characterized in that** rear wall coupling profiles (40) are diffent from said rear wall functionalizing profiles (30) **in that** the second coupling means (32) are provided on both sides of the rear wall coupling profiles (40) such that a closet arrangement can be formed with wall elements (1) on both sides of the rear wall elements (2), and that
the closet system further comprises functional elements (90-95) exhibiting the second suspension means, which are provided to be mounted to the rear walls of the closet arrangement through the rear wall functionalizing profiles (30) and which are provided for giving a functionality to the rear wall of the closet arrangement in the interior of a house.

2. Modular closet system according to claim 1, **characterized in that** the wall coupling profiles (10, 20) are provided as integral parts on the front and rear side of the wall elements (1).

3. Modular closet system according to claim 2, **characterized in that** the wall elements are constructed from finishing boards (3) on both sides, in between which an insulation material (4) is present, wherein the first holding elements (11) of the wall coupling profiles (10, 20) are glued against the inside of the finishing boards (3).

4. Modular closet system according to any one of the preceding claims, **characterized in that** the first suspension means on the rear wall functionalizing profiles (30) are designed as laterally-oriented slots (33), and **in that** the wall coupling profiles (10, 20) also comprise laterally-oriented slots (13, 23), provided for suspending accessories in the inner space of the closet arrangement, wherein the slots (33) on the rear wall functionalizing profiles (30) have the same shape as the slots (13, 23) on the wall coupling profiles (10, 20), such that the accessories and functional elements can be used both in the inner space of the closet arrangement and against the rear wall.

5. Modular closet system according to any one of the preceding claims, **characterized in that** the rear wall functionalizing profiles (30) each comprise a hollow space in which a fluorescent lighting (35) is incorporated.

6. Modular closet system according to any one of the preceding claims, **characterized in that** the rear wall functionalizing profiles (30) each comprise inclined portions (34) on both sides, which are directed towards a rear wall element held by the second holding means and onto which a LED lighting (36) is provided.

7. Modular closet system according to claim 6, **characterized in that** the inclined portions (34) are at an angle of 0-60 ° relative to a rear wall element (2) held by the second holding means (31).

8. Modular closet system according to claim 6, **characterized in that** the inclined portions (34) are at an angle of 0-45 ° relative to a rear wall element (2) held by the second holding means (31).

9. Modular closet system according to any one of the preceding claims, **characterized in that** the set of connection profiles further comprises front profiles (50), provided for finishing a front side of a closet arrangement, and coupling elements (60) for coupling the front profiles (50) to the first coupling means (12).

10. Modular closet system according to claim 9, **characterized in that** the coupling elements (60) provide a hollow space between the front profiles (50) and the wall coupling profiles (10), in which a fluorescent lights (35) is incorporated and which is closed off by means of transparent elements (70) on both sides of the coupling elements.

11. Modular closet system according to any one of the preceding claims, **characterized in that** the second holding means (31) of the rear wall functionalizing profiles (30) and the rear wall coupling profiles (40) comprise resilient strips (37) for holding the rear panels by clamping.

12. Modular closet system according to any one of the preceding claims, **characterized in that** the functional elements comprise at least one of the following: a shelf (90), a stabilizing base (91) which serves to prevent tipping over of the closet arrangement, a rod for clothes hangers 92 with a shelf, a rod for clothes hangers 93, a desktop 94 and a drawer unit 95.

## Patentansprüche

1. Modulares Innenausstattungssystem, umfassend:
- Wandelemente (1) zum Ausbilden von Seiten- und Trennwänden einer Innenausstattungsanordnung;
- Rückwandelemente (2) zum Ausbilden von Rückwänden einer Innenausstattungsanordnung;
- einen Satz von Verbindungsprofilen für die Verbindung der Wandelemente und der Rückwandelemente miteinander,
wobei der Satz von Verbindungsprofilen die folgenden Profile umfasst:
- Wandkoppelprofile (10, 20), von denen jedes erste Halteelemente (11, 21) zum Halten der Wandelemente (1) und erste Koppelmittel (12, 22) zum Koppeln mit den anderen Verbindungsprofilen des Satzes umfasst;
- Rückwandfunktionalisierungsprofile (30), von denen jedes zweite Haltemittel (31) zum Halten der Rückwandelemente (2), zweite Koppelmittel (32), die komplementär zu den ersten Koppelmittels (12, 22) sind, zum Koppeln der Rückwandfunktionalisierungsprofile (30) mit den Wandkoppelprofilen (10, 20) und erste Aufhängungsmittel, die zum Aufnehmen komplementärer zweiter Aufhängungsmittel vorgesehen sind, umfasst;
- Rückwandkoppelprofile (40), unterschiedlich zu den Rückwandfunktionalisierungsprofilen (30), welche auch die zweiten Haltemittel (31) zum Halten der Rückwandelemente (2) und die zweiten Koppelmittel (32), die komplementär zu den ersten Koppelmitteln (12, 22) der Wandkoppelprofile (10, 20) sind, umfassen,
**dadurch gekennzeichnet, dass** die Rückwandkoppelprofile (40) unterschiedlich zu den Rückwandfunktionalisierungsprofilen (30) sind, insofern die zweiten Koppelmittel (32) an beiden Seiten der Rückwandkoppelprofile (40) so vorgesehen sind, dass eine Innenausstattungsanordnung mit Wandelementen (1) auf beiden Seiten der Rückwandelemente (2) ausgebildet werden kann und dass
das Innenausstattungssystem des Weiteren funktionale Elemente (90-95) umfasst, welche die zweiten Aufhängungsmittel zeigen, die bereitgestellt sind, um an den Rückwänden der Innenausstattungsanordnung durch die Rückwandfunktionalisierungsprofile (30) angebracht zu werden,
und die zum Bereitstellen einer Funktionalität der Rückwand des Innenausstattungssystems im Inneren eines Hauses vorgesehen sind.

2. Modulares Innenausstattungssystem nach Anspruch 1, **dadurch gekennzeichnet, dass** die Wandkoppelprofile (10, 20) als integrale Teile auf der Vorder- und der Rückseite der Wandelemente (1) bereitgestellt sind.

3. Modulares Innenausstattungssystem nach Anspruch 2, **dadurch gekennzeichnet, dass** die Wandelemente aus Verkleidungsplatten (3) auf beiden Seiten aufgebaut sind, zwischen denen ein Isoliermaterial (4) vorhanden ist, wobei die ersten Halteelemente (11) der Wandkoppelprofile (10, 20) gegen die Innenseite der Verkleidungsplatten (3) geklebt sind.

4. Modulares Innenausstattungssystem nach jedem beliebigen der vorangehenden Ansprüche, **dadurch gekennzeichnet, dass** die ersten Aufhängungsmittel auf den Rückwandfunktionalisierungsprofilen (30) als seitlich ausgerichtete Schlitze (33) gestaltet sind und dass die Wandkoppelprofile (10, 20) auch seitlich ausgerichtete Schlitze (13, 23) umfassen, welche zum Aufhängen von Zubehör im Innenraum der Innenausstattungsanordnung vorgesehen sind, wobei die Schlitze (33) auf den Rückwandfunktionalisierungsprofilen (30) die gleiche Gestalt aufweisen wie die Schlitze (13, 23) auf den Wandkoppelprofilen (10, 20), so dass das Zubehör und die funktionalen Elemente sowohl im Innenraum der Innenausstattungsanordnung als auch gegen die Rückwand eingesetzt werden können.

5. Modulares Innenausstattungssystem nach jedem beliebigen der vorangehenden Ansprüche, **dadurch gekennzeichnet, dass** die Rückwandfunktionalisierungsprofile (30) jeweils einen hohlen Raum umfassen, in welchem eine fluoreszierende Beleuchtung (35) eingebaut ist.

6. Modulares Innenausstattungssystem nach jedem beliebigen der vorangehenden Ansprüche, **dadurch gekennzeichnet, dass** die Rückwandfunktionalisierungsprofile (30) jeweils geneigte Abschnitte (34) auf beiden Seiten umfassen, welche in Richtung eines Rückwandelements gerichtet sind, das durch die zweiten Haltemittel gehalten wird, und auf welchem eine LED-Beleuchtung (36) vorgesehen ist.

7. Modulares Innenausstattungssystem nach Anspruch 6, **dadurch gekennzeichnet, dass** die geneigten Abschnitte (34) sich in einem Winkel von 0-60 ° relativ zu einem Rückwandelement (2) befinden, welches durch die zweiten Haltemittel (31) gehalten wird.

8. Modulares Innenausstattungssystem nach Anspruch 6, **dadurch gekennzeichnet, dass** die geneigten Abschnitte (34) sich in einem Winkel von 0-45 ° relativ zu einem Rückwandelement (2) befinden, welches durch die zweiten Haltemittel (31) gehalten wird.

9. Modulares Innenausstattungssystem nach jedem beliebigen der vorangehenden Ansprüche, **dadurch gekennzeichnet, dass** der Satz von Verbindungsprofilen des Weiteren Vorderprofile (50), welche zum Abschließen einer Vorderseite einer Innenausstattungsanordnung bereitgestellt sind, und Koppelelemente (60) zum Koppeln der Vorderprofile (50) mit den ersten Koppelmitteln (12) umfasst.

10. Modulares Innenausstattungssystem nach Anspruch 9, **dadurch gekennzeichnet, dass** die Koppelelemente (60) einen hohlen Raum zwischen den Vorderprofilen (50) und den Wandkoppelprofilen (10) bereitstellen, in welchem fluoreszierende Lichter (35) eingebaut sind und welcher mittels transparenter Elemente (70) auf beiden Seiten der Koppelelemente abgeschlossen ist.

11. Modulares Innenausstattungssystem nach jedem beliebigen der vorangehenden Ansprüche, **dadurch gekennzeichnet, dass** die zweiten Haltemittel (31) der Rückwandfunktionalisierungsprofile (30) und der Rückwandkoppelprofile (40) elastische Streifen (37) zum Halten der Rückwandtafeln durch Klemmen umfassen.

12. Modulares Innenausstattungssystem nach jedem beliebigen der vorangehenden Ansprüche, **dadurch gekennzeichnet, dass** die funktionalen Elemente wenigstens eines der folgenden Elemente umfassen: ein Regalbrett (90), eine stabilisierende Basis (91), welche dazu dient, das Umkippen der Innenausstattungsanordnung zu verhindern, eine Stange für Kleiderbügel (92) mit einem Ablagebrett, eine Stange für Kleiderbügel (93), eine Tischplatte (94) und eine Schubladeneinheit (95).

## Revendications

1. Système de placard modulaire comprenant :
- des éléments de paroi (1) pour former des parois latérales et de séparation d'un aménagement de placard ;
- des éléments de paroi arrière (2) pour former des parois arrière d'un aménagement de placard ;
- un ensemble de profilés de liaison pour relier les éléments de paroi et les éléments de paroi arrière les uns aux autres,
ledit ensemble de profilés de liaison comprend les profilés suivants :
- des profilés d'accouplement de paroi (10, 20) dont chacun comprend des premiers éléments de maintien (11, 21) pour maintenir les éléments de paroi (1) et des premiers moyens d'accouplement (12, 22) pour l'accouplement d'autres profilés de liaison de l'ensemble ;
- des profilés de fonctionnalisation de paroi arrière (30) dont chacun comprend des deuxièmes moyens de maintien (31) pour maintenir les éléments de paroi arrière (2), des deuxièmes moyens d'accouplement (32) qui sont complémentaires des premiers moyens d'accouplement (12, 22) pour accoupler les profilés de fonctionnalisation de paroi arrière (30) avec les profilés d'accouplement de paroi (10, 20) et des premiers moyens de suspension prévus pour recevoir des deuxièmes moyens de suspension complémentaires ;
- des profilés d'accouplement de paroi arrière (40), différents des profilés de fonctionnalisation de paroi arrière (30), qui comprennent également les deuxièmes moyens de maintien (31) pour maintenir les éléments de paroi arrière (2) et les deuxièmes moyens d'accouplement (32) qui sont complémentaires des premiers moyens d'accouplement (12, 22) des profilés d'accouplement de paroi (10, 20),
**caractérisé en ce que** lesdits profilés d'accouplement de paroi arrière (40) sont différents desdits profilés de fonctionnalisation de paroi arrière (30) **en ce que** les deuxièmes moyens d'accouplement (32) sont prévus sur les deux côtés des profilés d'accouplement de paroi arrière (40) de sorte qu'un aménagement de placard peut être formé avec des éléments de paroi (1) sur les deux côtés des éléments de paroi arrière (2),
et **en ce que** le système de placard comprend en outre des éléments fonctionnels (90 - 95) présentant les deuxièmes moyens de suspension, qui sont prévus pour être montés sur les parois arrière de l'aménagement de placard par l'intermédiaire des profilés de fonctionnalisation de paroi arrière (30) et qui sont prévus pour donner une fonctionnalité à la paroi arrière de l'aménagement de placard à l'intérieur d'une maison.

2. Système de placard modulaire selon la revendication 1, **caractérisé en ce que** les profilés d'accouplement de paroi (10, 20) sont prévus comme des parties intégrantes sur le côté avant et arrière des éléments de paroi (1).

3. Système de placard modulaire selon la revendication 2, **caractérisé en ce que** les éléments de paroi sont conçus comme des panneaux de finition (3) sur les deux côtés, entre lesquels un matériau d'isolation (4) est présent, dans lequel les premiers éléments de maintien (11) des profilés d'accouplement de paroi (10, 20) sont collés contre l'intérieur des panneaux de finition (3).

4. Système de placard modulaire selon l'une quelconque des revendications précédentes, **caractérisé en ce que** les premiers moyens de suspension sur les profilés de fonctionnalisation de paroi arrière (30) sont conçus comme des fentes (33) orientées latéralement et **en ce que** les profilés d'accouplement de paroi (10, 20) comprennent aussi des fentes (13, 23) orientées latéralement, prévues pour suspendre des accessoires dans l'espace intérieur de l'aménagement de placard, dans lequel les fentes (33) sur les profilés de fonctionnalisation de paroi arrière (30) ont la même forme que les fentes (13, 23) sur les profilés d'accouplement de paroi (10, 20), de sorte que les accessoires et les éléments fonctionnels peuvent être utilisés tant dans l'espace intérieur de l'aménagement de placard que contre la paroi arrière.

5. Système de placard modulaire selon l'une quelconque des revendications précédentes, **caractérisé en ce que** les profilés de fonctionnalisation de paroi arrière (30) comprennent chacun un espace creux dans lequel un éclairage fluorescent (35) est incorporé.

6. Système de placard modulaire selon l'une quelconque des revendications précédentes, **caractérisé en ce que** les profilés de fonctionnalisation de paroi arrière (30) comprennent chacun des parties inclinées (34) sur les deux côtés, lesquelles sont dirigées vers un élément de paroi arrière maintenu par les deuxièmes moyens de maintien et sur lesquelles un éclairage DEL (36) est prévu.

7. Système de placard modulaire selon la revendication 6, **caractérisé en ce que** les parties inclinées (34) sont à un angle de 0 - 60° par rapport à un élément de paroi arrière (2) maintenu par les deuxièmes moyens de maintien (31).

8. Système de placard modulaire selon la revendication 6, **caractérisé en ce que** les parties inclinées (34) sont à un angle de 0 - 45° par rapport à un élément de paroi arrière (2) maintenu par les deuxièmes moyens de maintien (31).

9. Système de placard modulaire selon l'une quelconque des revendications précédentes, **caractérisé en ce que** l'ensemble des profilés de liaison comprend en outre des profilés avant (50), prévus pour finir un côté avant d'un aménagement de placard, et des éléments d'accouplement (60) pour accoupler les profilés avant (50) avec les premiers moyens d'accouplement (12).

10. Système de placard modulaire selon la revendication 9, **caractérisé en ce que** les éléments d'accouplement (60) fournissent un espace creux entre les profilés avant (50) et les profilés d'accouplement de paroi (10), dans lequel un éclairage fluorescent (35) est incorporé et qui est fermé au moyen d'éléments transparents (70) sur les deux côtés des éléments d'accouplement.

11. Système de placard modulaire selon l'une quelconque des revendications précédentes, **caractérisé en ce que** les deuxièmes moyens de maintien (31) des profilés de fonctionnalisation de paroi arrière (30) et les profilés d'accouplement de paroi arrière (40) comprennent des bandes élastiques (37) pour maintenir les panneaux arrière par serrage.

12. Système de placard modulaire selon l'une quelconque des revendications précédentes, **caractérisé en ce que** les éléments fonctionnels comprennent au moins un de ce qui suit : une étagère (90), une base stabilisatrice (91) qui sert à empêcher le basculement de l'aménagement de placard, une tringle pour cintres (92) avec une étagère, une tringle pour cintres (93), un plan de travail (94) et une unité de tiroirs (95).
